# EUROPÄISCHE PATENTSCHRIFT

(11) **EP 4 078 008 B1**
(45) Veröffentlichungstag und Bekanntmachung des Hinweises auf die Patenterteilung: **17.07.2024**
(21) Anmeldenummer: 20830160.6
(22) Anmeldetag: 16.12.2020
(51) Int. Cl.: F16L 55/18, E03F 3/06, F16L 55/48, B29C 35/10, H05B 6/64

(54) **SYSTEM ZUM AUSHÄRTEN UND/ODER ÜBERPRÜFEN EINER ROHRLEITUNGSAUSKLEIDUNG UND VERFAHREN ZUM AUSHÄRTEN UND/ODER ÜBERPRÜFEN EINER ROHRLEITUNGSAUSKLEIDUNG**
SYSTEM FOR CURING AND / OR TESTING A PIPE LINER AND METHOD FOR CURING AND / OR INSPECTING A PIPE LINER
SYSTÈME DE DURCISSEMENT ET/OU DE VÉRIFICATION D'UN REVÊTEMENT DE CONDUITE ET PROCÉDÉ DE DURCISSEMENT ET/OU DE VÉRIFICATION D'UN REVÊTEMENT DE CONDUITE

(30) Priorität: 18.12.2019 EP 19217632
(43) Veröffentlichungstag der Anmeldung: 26.10.2022
(73) Patentinhaber: bodus GmbH, 5000 Aarau (CH)
(72) Erfinder: BOLLER, Daniel, 5064 Wittnau (CH); WERNER, Klaus, 6603 DG Wijchen (NL); GOMES CANCIO, Joao Carlos, 20510-060 Tijuca - Rio de Janeiro (BR)
(74) Vertreter: Meissner Bolte Partnerschaft mbB
(86) Internationale Anmeldenummer: PCT/EP2020/086537
(87) Internationale Veröffentlichungsnummer: WO 2021/122825

(56) Entgegenhaltungen:
- EP-A1- 2 831 484
- CN-A- 108 843 892
- DE-C1- 10 049 101
- DE-T2- 69 503 917
- US-A- 4 009 063
- US-B2- 10 359 143
- US-B2- 7 852 091

## Beschreibung

Die Erfindung betrifft ein System zum Aushärten und/oder Überprüfen einer in einer Rohrleitung positionierten Rohrleitungsauskleidung, wobei die Rohrleitungsauskleidung eine äußere Kunststoffschicht und eine innere Faserverbund-Schicht aufweist, wobei die Faserverbund-Schicht einen zu härtenden und/oder zumindest teilweise gehärteten Kunststoff aufweist, gemäß Patentanspruch 1. Außerdem betrifft die Erfindung ein Verfahren zum Aushärten und/oder Überprüfen einer in einer Rohrleitung positionierten Rohrleitungsauskleidung, wobei die Rohrleitungsauskleidung eine äußere Kunststoffschicht und eine innere Faserverbund-Schicht aufweist, wobei die Faserverbund-Schicht einen zu härtenden und/oder zumindest teilweise gehärteten Kunststoff aufweist und das Verfahren mit einem erfindungsgemäßen System durchgeführt wird, gemäß Patentanspruch 15.

Aus dem Stand der Technik ist es bekannt, Rohrleitungen im Inneren mit einer Rohrleitungsauskleidung zu versehen, die eine äußere Kunststoffschicht und eine innere Faserverbund-Schicht aufweist.

Es ist bekannt, derartige Rohrleitungsauskleidungen, insbesondere die zugehörige Faserverbund-Schicht, mittels eines Dampfsystems zu härten.

Bei dem Aushärten der Rohrleitungsauskleidungen, insbesondere bei dem Aushärten der Faserverbund-Schicht, mit einem Dampfverfahren werden meist keine zufriedenstellenden Aushärtungszeiten erzielt. Außerdem müssen zum Durchführen eines Dampf-Aushärteverfahrens aufwändige Apparaturen zum Erzeugen des Dampfes zur Verfügung gestellt werden.

Aus dem Stand der Technik sind des Weiteren derartige Systeme bekannt, die auf der Anwendung von Mikrowellentechnik beruhen. Diese Systeme beruhen jeweils auf der Anwendung eines Magnetrons. Die Verwendung eines derartigen Magnetrons steht jedoch im Zusammenhang mit mehreren Nachteilen. Um mittels eines Magnetrons Mikrowellen zu erzeugen und entsprechend abzugeben, ist es notwendig, ein Wellenleiterstück vorzusehen. Derartige Wellenleiterstücke weisen jedoch derartige Abmessungen auf, dass beispielsweise eine Benutzung derartiger Systeme in Rohren mit einem Durchmesser kleiner als 100 mm nicht möglich ist. Auch der Einsatz in gebogenen Rohrabschnitten ist lediglich ab Biegeradien von 200 mm möglich.

Das Dokument DE69503917T2 zeigt eine Rohrleitung mit einem darin befindlichen Auskleidungsrohr welches von einem Gerät durchdrungen wird, das Mikrowellenenergie radial auf die Innenseite des Auskleidungsrohrs richtet. Der Auskleidungsschlauch reagiert auf zwei Arten auf die Energie: (i) er enthält ein aushärtbares Harz, das durch die Energie gehärtet wird, oder (ii) er ist thermoplastisch und enthält ein teilchenförmiges polares Material, das sich unter der Einwirkung der Mikrowellenenergie erwärmt, um den Schlauch zu erweichen, so dass er ausgedehnt werden kann.

Des Weiteren müssen Systeme, die ein Magnetron aufweisen, oftmals mittels aufwändiger Wasser- oder Luftkühlung gekühlt werden. Insbesondere ist es abhängig vom Aufbau und Form der Antennen der bekannten Systeme oftmals notwendig, aufwändige geschlossene Wasserkühlungsvorrichtung einzusetzen. Ein weiterer erheblicher Nachteil bezüglich bisher bekannter Systeme zum Auftragen von Mikrowellenenergie zur Aushärtung von Rohrleitungsauskleidungen besteht darin, dass die Antennen der Systeme exakt zentriert geführt werden müssen, um unterschiedliche Energieeinträge zu vermeiden. Bei entsprechenden Abweichungen in Bogenverläufen und/oder bei Veränderungen hinsichtlich des Durchmessers der auszukleidenden Rohre kann eine Antenne jedoch nicht mehr exakt zentriert geführt werden, so dass es an diesen Stellen zu unkontrollierten Aushärtungen kommen kann. Es ist möglich, dass zu wenig oder zu viel Mikrowellenenergie an den jeweiligen Abschnitt der Rohrleitungsauskleidung abgegeben wird.

Es ist somit Aufgabe der vorliegenden Erfindung, ein weiterentwickeltes System zum Aushärten und/oder Überprüfen einer in einer Rohrleitung positionierten Rohrleitungsauskleidung anzugeben, wobei das System einfach handhabbar sein soll.

Des Weiteren soll mit Hilfe eines weiterentwickelten Systems die entsprechend notwendige Zeit zum Aushärten der Rohrleitung effektiv verkürzt werden.

Außerdem soll mit Hilfe eines weiterentwickelten Systems eine exakte Steuerung des Energieeintrags auf eine in einer Rohrleitung positionierten Rohrleitungsauskleidung ermöglicht werden. Mit Hilfe des erfindungsgemäßen Systems soll es insbesondere ermöglicht werden, eine zuverlässige Aushärtung einer Rohrleitungsauskleidung auch in gebogenen Abschnitten eines Rohres sowie in Abschnitten mit unterschiedlichen Durchmessern oder in Anschlussbereichen von Rohren zu ermöglichen.

Ein weiterer Wunsch hinsichtlich eines weiterentwickelten Systems besteht darin, als dass dieses nicht nur zum Aushärten einer Rohrleitung, sondern auch zum Überprüfen einer Rohrleitung verwendet werden soll. Mit Hilfe eines weiterentwickelten Systems soll somit ein System zur Verfügung gestellt werden, mittels dessen Anwendung beispielsweise nach dem Aushärteprozess eine Überprüfung hinsichtlich des zumindest teilweise gehärteten Kunststoffes durchgeführt werden kann.

Eine weitere Aufgabe der vorliegenden Erfindung ist es, ein weiterentwickeltes Verfahren zum Aushärten und/oder Überprüfen einer Rohrleitungsauskleidung anzugeben, wobei mit Hilfe des erfindungsgemäßen Verfahrens die Aushärtezeit der Rohrleitungsauskleidung verkürzt werden soll.

Des Weiteren soll mit Hilfe eines weiterentwickelten Verfahrens eine abschnittsweise Steuerung hinsichtlich des Energieeintrages auf die auszuhärtende Rohrleitungsauskleidung ermöglicht werden.

Erfindungsgemäß wird die erläuterte Aufgabe im Hinblick auf das System zum Aushärten und/oder Überprüfen einer in einer Rohrleitung positionierten Rohrleitungsauskleidung durch den Gegenstand des Patentanspruches 1 und im Hinblick auf das Verfahren zum Aushärten und/oder Überprüfen einer in einer Rohrleitung positionierten Rohrleitungsauskleidung durch den Gegenstand des Patentanspruches 15 gelöst.

Die Erfindung beruht auf dem Gedanken, ein System zum Aushärten und/oder Überprüfen einer in einer Rohrleitung positionierten Rohrleitungsauskleidung anzugeben, wobei die Rohrleitungsauskleidung eine äußere Kunststoffschicht und eine innere Faserverbund-Schicht aufweist, wobei die Faserverbund-Schicht einen zu härtenden und/oder zumindest teilweise gehärteten Kunststoff aufweist. Erfindungsgemäß weist das System mindestens eine Hochfrequenz-Einheit auf, die mindestens eine Mikrowellen-Generator-Einheit und mindestens eine Mikrowellen-Sendeantenne zum Aushärten eines zu härtenden Kunststoffs aufweist, wobei zumindest die mindestens eine Mikrowellen-Sendeantenne mittels einer Transporteinrichtung in der Rohrleitung bewegbar ist.

Das System ist demnach sowohl zum Aushärten von Kunststoffen einer Faserverbund-Schicht einer Rohrleitungsauskleidung geeignet, als auch zur Überprüfung einer Rohrleitungsauskleidung mit gehärtetem oder zumindest teilweise gehärtetem Kunststoff.

Bei der Rohrleitung kann es sich um sämtliche Rohrleitungen handeln.

Insbesondere kann es sich um Rohrleitungen im Kanalisierungsbereich handeln. Bei der Rohrleitung kann es sich beispielsweise um eine In-House-Leitung und/oder eine Grundstücksentwässerungsleitung und/oder um eine Sammelleitung und/oder um eine Abzweigungsmanschette und/oder um ein T-Stück, handeln. Die Rohrleitung kann dabei sämtliche Rohrdurchmesser und/oder Geometrien aufweisen.

Vorzugsweise sind die Rohrleitungen bei Verwendung des Systems bereits verlegt bzw. eingebaut. Es ist allerdings auch möglich, dass das System bei noch nicht eingebauten bzw. verlegten Rohrleitungen angewandt wird.

Erfindungsgemäß umfasst das System die mindestens eine Hochfrequenz-Einheit, die mindestens eine Mikrowellen-Generator-Einheit und mindestens eine Mikrowellen-Sendeantenne aufweist.

Bei der Hochfrequenz-Einheit kann es sich um eine derartige Einheit handeln, die die Mikrowellen-Generator-Einheit sowie die mindestens eine Mikrowellen-Sendeantenne baulich miteinander vereint. Des Weiteren ist es möglich, dass die Mikrowellen-Generator-Einheit sowie die mindestens eine Mikrowellen-Sendeantenne baulich voneinander getrennt sind und lediglich durch eine Leitung bzw. ein Kabel miteinander verbunden sind.

Zumindest die mindestens eine Mikrowellen-Sendeantenne ist mittels einer Transporteinrichtung in der Rohrleitung bewegbar. Dies ist insbesondere notwendig, sofern die Mikrowellen-Generatoreinheit baulich getrennt von der mindestens einen Mikrowellen-Sendeantenne ausgebildet ist. Es ist demnach möglich, dass die Mikrowellen-Generator-Einheit außerhalb der Rohrleitung verbleibt, während die mindestens eine Mikrowellen-Sendeantenne mittels mindestens einer Transporteinrichtung in der Rohrleitung bewegbar ist oder bewegt wird.

Die sich während der Anwendung des Systems in der Rohrleitung befindlichen Teile des Systems können als Rohrleitungs-Baugruppe bezeichnet werden. Die Rohrleitungs-Baugruppe umfasst mindestens eine Mikrowellen-Sendeantenne und mindestens eine Transportvorrichtung. Die Mikrowellen-Generator-Einheit ist nicht zwingend als Teil der Rohrleitungs-Baugruppe ausgebildet. Es ist möglich, dass die Rohrleitungs-Baugruppe sämtliche Bauteile des Systems aufweist.

Das Ausbilden einer Hochfrequenz-Einheit mit einer Mikrowellen-Sendeantenne hat zum einen den Vorteil, dass ein Aushärteverfahren im Vergleich zu bekannten Verfahren hinsichtlich des Aushärtens von Kunststoff in Rohrleitungen schneller durchgeführt werden kann. Zum anderen kann das System aufgrund des Ausbildens einer Mikrowellen-Sendeantenne zugleich zum Überprüfen einer Rohrleitung bzw. einer Rohrleitungsauskleidung hinsichtlich des Härtungsgrades eines Kunststoffes verwendet werden. Das System umfasst folglich Bauteile mit geringeren Ausmaßen, die außerdem einfacher handzuhaben sind.

Die Hochfrequenz-Einheit des erfindungsgemäßen Systems kann mindestens zwei Mikrowellen-Generator-Einheiten, insbesondere mindestens drei Mikrowellen-Generator-Einheiten, insbesondere mindestens vier Mikrowellen-Generator-Einheiten umfassen. Mit anderen Worten ist es möglich, dass die Hochfrequenz-Einheit mindestens zwei Mikrowellen-Generator-Einheiten, insbesondere mindestens drei Mikrowellen-Generator-Einheiten, insbesondere mindestens vier Mikrowellen-Generator-Einheiten, aufweist. Mit steigender Anzahl von Mikrowellen-Generator-Einheiten ist es möglich, mehrere hochleistungsstarke Mikrowellen-Sendeantennen zu verwenden.

Vorzugsweise weist die Hochfrequenz-Einheit mehrere Mikrowellen-Generator-Einheiten sowie mehrere Mikrowellen-Sendeantennen auf. Besonders bevorzugt weist die Hochfrequenz-Einheit eine gleiche Anzahl von Mikrowellen-Generator-Einheiten und Mikrowellen-Sendeantennen auf.

Die mindestens eine Mikrowellen-Generator-Einheit kann 100 - 1.000 Watt Mikrowellenleistung erzeugen. Besonders bevorzugt ist es, wenn eine Mikrowellen-Generator-Einheit mindestens 500 Watt Mikrowellenleistung erzeugt.

Die Hochfrequenz-Einheit wird als Solid state Hochfrequenz-Einheit oder als Solid state Mikrowellen-Einheit ausgebildet. Das "Solid state" betrifft dabei die zur Hochfrequenz oder Mikrowellenerzeugung eingesetzten Halbleiterbauteile der Einheiten.

Erfindungsgemäß handelt es sich bei der mindestens einen Mikrowellen-Generator-Einheit um eine Festkörper-Mikrowellen-Generator-Einheit. Mit anderen Worten handelt es sich bei der Mikrowellen-Generator-Einheit um mindestens einen Festkörper-Mikrowellen-Generator.

Die Ausbildung als Festkörper-Mikrowellen-Generator geht mit mehreren Vorteilen einher. Zum einen kann auf bislang bekannte Wellenleiterstücke verzichtet werden, wie dies bei der Verwendung eines Magnetrons bekannt ist. Mit Hilfe des erfindungsgemäßen Systems ist es daher möglich, dieses auch in Rohrleitungen mit kleinen Abmaßen sowie in Rohrleitungen mit Bögen und/oder mit gebogenen Teilabschnitten zu verwenden. Des Weiteren ist es besonders vorteilhaft, dass ein Festkörper-Mikrowellen-Generator bzw. eine Festkörper-Mikrowellen-Generator-Einheit hinsichtlich der Leistung einfach geregelt werden kann. Des Weiteren kann die real abgestrahlte Leistung einer Festkörper-Mikrowellen-Generator-Einheit einfach detektiert werden. Es ist somit jederzeit eine einfache Prozesskontrolle bzw. Steuerung eines zum System zugehörigen Verfahrens zum Aushärten und Überprüfen einer in einer Rohrleitung positionierten Rohrleitungsauskleidung möglich.

In einer bevorzugten Ausführungsform der Erfindung umfasst das System, insbesondere die Hochfrequenz-Einheit, mindestens drei Mikrowellen-Sendeantennen.

In einer weiteren bevorzugten Ausführungsform der Erfindung umfasst die Hochfrequenz-Einheit pro Mikrowellen-Sendeantenne eine Mikrowellen-Generator-Einheit. Diese ermöglicht es, dass pro Mikrowellen-Sendeantenne ausreichende Mikrowellenleistung zur Verfügung gestellt wird.

Es ist möglich, dass die Hochfrequenz-Einheit mindestens eine halbleiterbasierte Mikrowellen-Generator-Einheit umfasst. Bei der halbleiterbasierten Mikrowellen-Generator-Einheit handelt es sich besonders bevorzugt um die bereits beschriebene Festkörper-Mikrowellen-Generator-Einheit. Der Vorteil einer halbleiterbasierten Mikrowellen-Generator-Einheit gegenüber einer Vakuumröhren-basierten Mikrowellen-Generator-Einheit liegt insbesondere in der dadurch verbesserten Möglichkeit zur Kontrolle über die erzeugte Leistung und Frequenz. Mit anderen Worten ist aufgrund der Verwendung einer halbleiterbasierten Mikrowellen-Generator-Einheit eine Anpassungsadaption und somit ein effizientes Einbringen der erzeugten Hochfrequenz-Energie möglich.

Ergänzend ist es möglich, dass das Aushärten der Rohrleitungsauskleidung, insbesondere des Kunststoffs, mittels fluidförmiger Härtung erfolgt. Zum Aushärten der Rohrleitungsauskleidung kann also eine Kombination aus fluidförmigem Härten und Beaufschlagung mit Hochfrequenz-Energie erfolgen.

Die Kombination kann gleichzeitig oder zeitlich aufeinander folgend durchgeführt werden.

Als fluidförmige Härtung ist beispielsweise eine Erwärmung mittels Dampf und/oder heißer Luft und/oder heißem Wasser oder beispielsweise eine Kalthärtung zu verstehen.

Des Weiteren ist es möglich, dass das System mindestens einen Infrarot-Sensor und/oder mindestens einen Temperatursensor und/oder mindestens einen Drucksensor und/oder mindestens einen Feuchtigkeitssensor und/oder mindestens einen Positionssensor und/oder mindestens einen Wegmessungssensor und/oder mindestens einen Gyrosensor aufweist.

In einer Ausführungsform der Erfindung ist es möglich, dass die genannten Sensoren als Teil einer Sensor-Einheit ausgebildet sind. Des Weiteren ist es möglich, dass die genannten Sensoren an unterschiedlichen Abschnitten des erfindungsgemäßen Systems ausgebildet sind.

Des Weiteren ist es möglich, dass die Sensor-Einheit lediglich einen der genannten Sensoren umfasst. Besonders bevorzugt umfasst die Sensor-Einheit mindestens einen Infrarot-Sensor.

Ein Infrarot-Sensor misst vorzugsweise die Oberflächentemperatur der Rohrleitungsauskleidung. Dies ermöglicht zum einen eine Überprüfung des durchzuführenden Härtungsvorgangs. Zum anderen kann die erfasste Temperatur beispielsweise aufgezeichnet bzw. gespeichert werden.

Mittels des Temperatursensors wird vorzugsweise eine Messung der Umgebungstemperatur durchgeführt. Dies dient beispielsweise der Steuerung des Härtungsvorgangs. Auch ein Aufzeichnen der beim Härtungsvorgang herrschenden Umgebungstemperaturen ist vorteilhaft.

Mit Hilfe des mindestens einen Drucksensors und/oder des mindestens einen Feuchtigkeitssensors werden ebenfalls Druck- und/oder Feuchtigkeitsmessungen hinsichtlich der Umgebung durchgeführt. Auch diese Werte können zur Steuerung des Härtungsvorganges herangezogen werden.

Mit Hilfe des Wegmessungssensors und/oder des Positionssensors kann die Position der sich in der Rohrleitung befindlichen Teile des Systems bzw. der Rohrleitungs-Baugruppe gemessen werden.

Auch das Ausbilden mindestens eines Gyrosensors ermöglicht die Detektion der räumlichen Position der sich in der Rohrleitung befindenden Teile des Systems.

Die Sensoren, die zur Detektion der Position bzw. zurückgelegten Wegstrecke einzelner Teile des Systems bzw. der Rohrleitungs-Baugruppe in der Rohrleitung dienen, haben den Vorteil, dass ein Anwender des erfindungsgemäßen Systems während der Durchführung eines Härtungs- und/oder eines Überprüfungsverfahrens jederzeit weiß, an welcher Stelle der ansonsten nicht einsehbaren Rohrleitung sich Teile des erfindungsgemäßen Systems befinden.

In einer Ausführungsform des erfindungsgemäßen Systems ist es möglich, dass die Transporteinrichtung mindestens einen Front-Abschnitt und mindestens einen Heck-Abschnitt umfasst, wobei der Front-Abschnitt und der Heck-Abschnitt voneinander baulich getrennt sein können. Der Front-Abschnitt und der Heck-Abschnitt sind vorzugsweise Teile der Rohrleitungs-Baugruppe.

Als Front-Abschnitt der Transporteinrichtung ist der Abschnitt zu verstehen, der im Benutzungszustand als erstes Element in eine Rohrleitung eingeführt wird. Mit anderen Worten ist der Front-Abschnitt in Bewegungsrichtung der sich innerhalb der Rohrleitung befindlichen Teile als erstes Element ausgebildet.

Als Heck-Abschnitt ist ein derartiger Abschnitt zu verstehen, der ein hinteres Endstück der Transporteinrichtung bildet. Im Benutzungszustand ist der Heck-Abschnitt der Abschnitt der Transporteinrichtung bzw. der Abschnitt der sich in der Rohrleitung befindlichen Teile des Systems, der nach hinten blickt und in Bewegungsrichtung des Systems gesehen, das letzte Element bildet.

Bei einer derartigen Ausbildung der Transporteinrichtung ist es außerdem möglich, dass zwischen dem Front-Abschnitt und dem Heck-Abschnitt mindestens ein Zwischen-Abschnitt ausgebildet ist. Es ist möglich, dass mehrere Zwischen-Abschnitte, die wiederum baulich voneinander getrennt sind, zwischen dem Front-Abschnitt und dem Heck-Abschnitt ausgebildet sind. Der mindestens eine Zwischen-Abschnitt ist vorzugsweise sowohl vom Front-Abschnitt als auch vom Heck-Abschnitt baulich getrennt ausgebildet.

Bei Ausbildung mehrerer Zwischen-Abschnitte ist es möglich, dass den verschiedenen Zwischen-Abschnitten verschiedene Funktionen zugeordnet werden. Beispielsweise ist es möglich, dass ein Zwischen-Abschnitt mindestens eine Mikrowellen-Sendeantenne umfasst, wohingegen ein Zwischen-Abschnitt Sensoren und/oder Teile einer Sensor-Einheit umfasst. Aufgrund des Ausbildens mehrerer Zwischen-Abschnitte ist es möglich, verschiedene Zwischen-Abschnitte wahlweise miteinander zu kombinieren. Demnach ist es möglich, das System in Abhängigkeit der baulichen Bedingungen zu erweitern und/oder zu verkleinern.

Vorzugsweise weist der Front-Abschnitt und/oder der Heck-Abschnitt mindestens zwei, vorzugsweise mindestens drei, Beinelemente auf. Vorzugsweise weisen sowohl der Front-Abschnitt als auch der Heck-Abschnitt jeweils mindestens zwei Beinelemente auf. Sofern Zwischen-Abschnitte ausgebildet sind, ist es möglich, dass auch mindestens ein Zwischen-Abschnitt mindestens zwei Beinelemente aufweist.

Vorzugsweise sind die Beinelemente mittels einer Feder vorgespannt. Vorzugsweise sind die Beinelemente derart ausgebildet, dass der aufgrund der Beinelemente gebildete Radius bzw. Durchmesser auf den Durchmesser der zu bearbeitenden und/oder zu überprüfenden Rohrleitung eingestellt werden kann. Insbesondere sollen die Beinelemente derart ausgebildet sein, dass aufgrund einer Vorspannung, die insbesondere mittels Federn realisiert wird, eine Einstellung der durch die Beinelemente hergestellten Radien/Durchmesser in Abhängigkeit von beispielsweise ausgebildeten Rohrbögen in der Rohrleitung und/oder Nennweitenveränderungen während des Durchführens eines Verfahrens durchführen zu können.

An einem Ende des Beinelements, das im Benutzungszustand in Richtung der Rohrleitungsauskleidung weist, ist vorzugsweise eine Rolle und/oder ein Rad und/oder ein Reifen und/oder eine Raupe befestigt. Vorzugsweise ist an allen Beinelementen des erfindungsgemäßen Systems eine Rolle und/oder ein Rad und/oder ein Reifen und/oder eine Raupe befestigt. Die Ausbildung derartiger Elemente an einem Ende eines Beinelements ermöglicht eine einfache Bewegung des Front-Abschnitts und/oder des Heck-Abschnitts und/oder eines möglicherweise ausgebildeten Zwischen-Abschnitts.

In einer weiteren Ausführungsform der Erfindung ist es möglich, dass zur Zentrierung einer Transporteinrichtung und/oder von den Teilen des Systems, die sich in einer Rohrleitung befinden und/oder von einer Rohrleitungs-Baugruppe, mindestens ein Blasebalg ausgebildet ist. Anstelle von Beinelementen können die Systembauteile, insbesondere bei kleineren Rohrdurchmessern, mittels mindestens eines Blasebalgs ausgerichtet und/oder zentriert werden.

Bei größeren Nennweiten von Rohrleitungen, typischerweise ab Nennweiten von 200 mm, werden hingegen vorzugsweise die beschriebenen Beinelemente ausgebildet. Alternativ und/oder zusätzlich ist es möglich, dass mindestens zwei radial ausgeführte Bürsten oder mindestens zwei Federn zur Zentrierung ausgebildet sind.

Das erfindungsgemäße System kann mindestens eine Kamera aufweisen. Vorzugsweise ist die mindestens eine Kamera mit einer Beleuchtungseinheit ausgebildet. Die mindestens eine Kamera kann im Bereich des Front-Abschnitts und/oder im Bereich des Heck-Abschnitts ausgebildet sein.

Eine im Bereich des Front-Abschnitts ausgebildete Kamera ist vorzugsweise nach vorne blickend ausgebildet. Eine im Bereich des Heck-Abschnitts ausgebildete Kamera ist vorzugsweise nach hinten blickend ausgebildet. Die Bezeichnungen "nach vorne" und "nach hinten" sind in Relation zur Bewegungsrichtung der sich in der Rohrleitung befindlichen Bauteile des Systems zu verstehen.

In einer weiteren Ausführungsform der Erfindung ist es möglich, dass die Transporteinrichtung mindestens einen Seilzug aufweist, wobei mindestens eine Befestigungseinrichtung zur Anbringung des Seilzugs ausgebildet ist.

In einer möglichen Ausführungsform der Erfindung ist es möglich, dass das erfindungsgemäße System zwei Befestigungseinrichtungen, insbesondere zwei Ösen, für Zugseile aufweist.

Eine Befestigungseinrichtung, insbesondere eine Öse, ist vorzugsweise im vorderen Bereich des sich im Benutzungszustand in der Rohrleitung befindlichen vorderen Bauteils, insbesondere im Bereich des Front-Abschnitts ausgebildet. Um die Vorrichtung aus der Rohrleitung entfernen zu können, ist des Weiteren am hinteren Ende, insbesondere am Heck-Abschnitt des Systems, eine Befestigungseinrichtung, insbesondere eine Öse, für ein Zugseil vorgesehen. Eine derartige Anordnung des Zugseils bewirkt, dass die in der Rohrleitung befindlichen Elemente nach der Durchführung des Aushärtens und/oder nach Durchführung des Überprüfungsverfahrens aus der Rohrleitung entfernt werden kann.

In einer weiteren Ausführungsform der Erfindung ist es möglich, dass die Transporteinrichtung eine Schubvorrichtung, insbesondere ein Schubkabel, umfasst. Diese Schubvorrichtung ist vorzugsweise am hinteren Ende, besonders bevorzugt am Heck-Abschnitt, des Systems angebracht. Mit Hilfe eines Schubsystems können Teile der Vorrichtung bzw. Teile des Systems in die Rohrleitung geschoben und anschließend herausgezogen werden.

Das Ausbilden einer Schubvorrichtung ist insbesondere vorteilhaft, sofern die mindestens eine Mikrowellen-Generator-Einheit außerhalb der Rohrleitung verbleibt und lediglich mindestens eine Mikrowellen-Sendeantenne der Hochfrequenz-Einheit in die Rohrleitung eingeführt wird. Bei einer derartigen Ausführungsform der Erfindung umfasst der Teil des Systems, der in die Rohrleitung eingeführt wird, somit die mindestens eine Mikrowellen-Sendeantenne und vorzugsweise zusätzlich Sensorik bzw. Sensoren. Die in die Rohrleitung einzuführende Vorrichtung weist in diesem Fall beispielsweise eine Kugelkopfform oder eine Eiform auf. Mit anderen Worten kann die Rohrleitungs-Baugruppe eine Außenhülle mit einer Kugelkopfform oder einer Eiform aufweisen. Eine derartige Ausbildung der Rohrleitungs-Baugruppe hat den Vorteil, dass diese sehr einfach in die Rohrleitung eingeführt und darin bewegt werden kann.

Des Weiteren ist es möglich, dass ein Teil der Transporteinrichtung eine Umlenkrolle am Ende eines Liners und/oder am Ende eines Kalibrierschlauches und/oder am Ende einer Liner-Endkappe ist. Das erfindungsgemäße System kann außerdem einen Endtopf zum Einbau des in die Rohrleitung einzuführenden Teils des Systems sowie des Liners/Kalibrierschlauch-Pakets umfassen.

Es ist möglich, dass das erfindungsgemäße System eine Art Hülle und/oder Blase aufweist, wobei die mindestens eine Mikrowellen-Antenne sowie ggf. die Sensoren bzw. der Sensor in dieser Blase/Hülle befindlich sind.

Die Hülle/Blase ist derart ausgebildet, dass die Rohrleitungsauskleidung nach außen an die Rohrleitung gedrückt werden kann. Eine derartige Ausführung des erfindungsgemäßen Systems erleichtert die Positionierung der Rohrleitungsauskleidung in der Rohrleitung, wobei im gleichen Schritt ein Aushärten der Rohrleitungsauskleidung erfolgen kann.

In einer weiteren Ausführungsform der Erfindung kann das System eine Positionsbestimmungs-Einheit umfassen. Die Positionsbestimmungs-Einheit kann ein LIDAR-System und/oder ein Ultraschall-System und/oder eine Bilderfassungs-Einheit und/oder ein Encoder auf einem/dem Seilzug der Transportvorrichtung sein. Mit Hilfe einer derartigen Positionsbestimmungs-Einheit kann der Anwender des erfindungsgemäßen Systems jederzeit nachvollziehen, an welcher Position der Rohrleitung sich die Teile des Systems (Rohrleitungs-Baugruppe) befinden, die in die Rohrleitung eingeführt wurden.

Bei dem zu härtenden und/oder zumindest teilweise gehärteten Kunststoff der Faserverbund-Schicht kann es sich um einen wärmehärtenden Kunststoff, insbesondere um ein Epoxid-Harz oder ein ungesättigtes Polyester-Harz (UP-Harz) oder um Vinylester (VE) handeln.

In einer weiteren Ausführungsform der Erfindung ist es möglich, dass die Faserverbund-Schicht Glasfasern umfasst.

Das System kann außerdem eine Durchmesser-Erfassungs-Einheit, insbesondere eine optische Durchmesser-Erfassungs-Einheit oder eine Ultraschall-Durchmesser-Erfassungs-Einheit, umfassen. Die von der Durchmesser-Erfassungs-Einheit erfassten Daten können insbesondere zur Steuerung des Aushärtevorgangs verwendet werden. Des Weiteren ist es möglich, dass die von der Durchmesser-Erfassungs-Einheit erfassten Werte zur Einstellung von möglicherweise ausgebildeten Beinelementen und/oder zur Qualitätssicherung herangezogen werden. Im Zusammenhang mit der Qualitätssicherung ist es beispielsweise möglich mit Hilfe der Durchmesser-Erfassungs-Einheit Fehlstellen oder Beulen oder Engstellen oder Abzweigungen zu detektieren. Bei einem Spincoat-Verfahren kann auch direkt mit der in die Rohrleitung eingeführten Vorrichtung die aufgetragene Schichtdicke gemessen bzw. detektiert werden.

Die Rohrleitungsauskleidung ist vorzugsweise schlauchartig und/oder strumpfartig ausgebildet. Bei Ausbildung einer derartigen Rohrleitungsauskleidung liegen keine Verbindungskanten und/oder Überlappungsbereiche des Auskleidungsmaterials vor, so dass diesbezüglich von keinen Schwächungspunkten im mit der Rohrleitung verbundenen Zustand auszugehen ist.

Die mindestens eine Mikrowellen-Sendeantenne kann eine Schlitzantenne oder eine Monopol-Antenne oder eine Patch-Antenne oder eine Dipol-Antenne oder ein Hornstrahler sein.

Des Weiteren ist es möglich, dass bei Ausbildung mehrerer Mikrowellen-Sendeantennen diese unterschiedlich ausgebildet sind und entsprechend unterschiedliche Arten von Mikrowellen-Sendeantennen in Zusammenhang mit der Hochfrequenz-Einheit ausgebildet sein können.

Die mindestens eine Mikrowellen-Sendeantenne kann von einer Strahlungsabgabe-Steuereinheit angesteuert oder ansteuerbar sein. Mit Hilfe einer Strahlungsabgabe-Steuereinheit wird die von der Mikrowellen-Generator-Einheit generierte Mikrowellenleistung geregelt und/oder reguliert an die Mikrowellen-Sendeantenne weitergeleitet. Demnach ist es möglich, eine Einstellung hinsichtlich der von der Mikrowellen-Sendeantenne ausgestrahlten Mikrowellenleistung vorzunehmen. Mit Hilfe einer sog. Solid state Hochfrequenz-Einheit bzw. einer Festkörper-Mikrowellen-Generator-Einheit können die Frequenz, die Leistung sowie die Hochfrequenz-Signalphasen eingestellt werden. Bezüglich der Leistung ist es möglich eine lineare Leistungseinstellung oder eine Pulsweiten-Einstellung oder eine Einstellung der Versorgungsspannung des Netzteiles vorzunehmen. Die unabhängige Einstellung der Hochfrequenz-Signalphasen ist insbesondere bei der Verwendung mehrerer kohärenter Mikrowellen-Generator-Einheiten vorteilhaft bzw. notwendig.

Vorzugsweise weist das System mehrere Mikrowellen-Sendeantennen auf, wobei diese Mikrowellen-Sendeantennen von mindestens einer Strahlungsabgabe-Steuereinheit getrennt voneinander angesteuert oder ansteuerbar sind. Des Weiteren ist es möglich, dass das System mehrere Strahlungsabgabe-Steuereinheiten aufweist. Jede Mikrowellen-Sendeantenne kann bei einer derartigen Ausführung der Erfindung von einer separaten Strahlungsabgabe-Steuereinheit angesteuert oder ansteuerbar sein.

Es ist möglich, dass das System beispielsweise mittels Verstärker und/oder Splitter eine segmentweise Steuerung der Mikrowellen-Sendeantennen ermöglicht. Die Mikrowellen-Sendeantennen können in diesem Fall getrennt voneinander angesteuert werden. Dies hat entsprechende Vorteile bei der Anordnung mehrerer Mikrowellen-Sendeantennen. Beispielsweise kann eine erste Mikrowellen-Sendeantenne im Bereich eines (seitlichen) Rohranschlusses mit geringerer Energie beaufschlagt werden, als eine weitere Mikrowellen-Sendeantenne, die sich an einer gegenüberliegenden Position im Rohr befindet.

Des Weiteren ist es bei einer derartigen Ausführungsform des Systems möglich, die Leistung bzw. abzugebende Energie der jeweiligen Mikrowellen-Sendeantenne in Abhängigkeit detektierter Umgebungsparameter und/oder in Abhängigkeit eines detektierten Verletzungsgrades des zumindest teilweise gehärteten Kunststoffes zu steuern.

Das System kann des Weiteren mindestens eine Aufzeichnungseinheit zur Speicherung von Umgebungsparametern und/oder zur Speicherung des Energieverbrauchs und/oder zur Speicherung von Verfahrensablaufdaten aufweisen. Diese Daten können beispielsweise zur Dokumentation von durchgeführten Aushärtungsverfahren genutzt werden. Des Weiteren ist es möglich, beispielsweise bei Vorliegen eines Schadensfalls, auf die ursprünglichen Verfahrensablaufdaten zurückgreifen zu können und mögliche Fehlerquellen ausfindig zu machen.

Das erfindungsgemäße System kann in einer weiteren Ausführungsform mindestens eine Luftkühlungs-Einheit aufweisen. Aufgrund der erfindungsgemäßen Ausbildung des Systems, insbesondere aufgrund der möglichen Verwendung von Festkörper-Mikrowellen-Generator-Einheiten, ist es möglich eine Luftkühlungs-Einheit auszubilden. Bei bislang bekannten Systemen zum Aushärten von Rohrleitungsauskleidungen sind Wasserkühlungs-Vorrichtungen notwendig, um eine ausreichende Kühlung zu erzielen. Dies ist erfindungsgemäß nicht notwendig.

Es ist beispielsweise möglich, eine Kühlung mittels Pressluft durchzuführen. Eine Luftkühlungs-Einheit ist im Vergleich zu einer Wasserkühlungs-Vorrichtung wesentlich einfacher zu verwenden. Die hierfür notwendigen Komponenten sind ebenfalls einfacher zu konstruieren sowie einfacher handhabbar. Aufgrund der Ausbildung von Festkörper-Mikrowellen-Generator-Einheiten ist es in vielen Anwendungen ausreichend, eine Luftkühlung, insbesondere eine Pressluftkühlung, vorzusehen. Die prinzipielle Möglichkeit einer Wasserkühlung ist jedoch auch gegeben und kann auch mit Hilfe von Festkörper-Mikrowellen-Generator-Einheiten umgesetzt werden, sofern dies aufgrund der Anwendungsumgebung notwendig ist.

Ein weiterer Aspekt der Erfindung betrifft ein Verfahren zum Aushärten und/oder Überprüfen einer in einer Rohrleitung positionierten Rohrleitungsauskleidung, wobei die Rohrleitungsauskleidung eine äußere Kunststoffschicht und eine innere Faserverbund-Schicht aufweist, wobei die Faserverbund-Schicht einen zu härtenden und/oder zumindest teilweise gehärteten Kunststoff aufweist.

Die Erfindung beruht darauf, dass das erfindungsgemäße Verfahren mit einem erfindungsgemäßen System durchgeführt wird und zumindest Teile des Systems, insbesondere eine Rohrleitungs-Baugruppe, derart in die Rohrleitung eingeführt werden/wird, dass diese Teile des Systems von der Rohrleitungsauskleidung, insbesondere beabstandet, umgeben sind, wobei der Kunststoff der Faserverbund-Schicht aufgrund der von der mindestens einen Mikrowellen-Sendeantenne ausgesendeten Mikrowellen gehärtet wird und/oder der zumindest teilweise gehärtete Kunststoff hinsichtlich seines Vernetzungsgrades überprüft wird.

Mit Hilfe des erfindungsgemäßen Verfahrens ist es nunmehr möglich, sowohl ein Verfahren zum Aushärten als auch ein Verfahren zum Überprüfen einer in einer Rohrleitung positionierten Rohrleitungsauskleidung zur Verfügung zu stellen, die erheblich schneller durchführbar sind, als dies gemäß Stand der Technik bekannt ist.

Insbesondere ist es aufgrund des erfindungsgemäßen Verfahrens möglich, mit einem System sowohl ein Verfahren zum Aushärten als auch ein Verfahren zum Überprüfen einer Rohrleitungsauskleidung durchführen zu können.

Es ist möglich, dass der Härtegrad des zu härtenden Kunststoffs durch Steuerung der mindestens einen Mikrowellen-Sendeantenne mittels einer Strahlungsabgabe-Steuereinheit eingestellt wird. Die abgestrahlte/die absorbierte Mikrowellenenergie ist demnach mittels der Strahlungsabgabe-Steuereinheit einstellbar. In erster Näherung gilt, dass mit zunehmendem Mikrowellen-Energieeintrag pro zu härtender Kunststoffflächeneinheit, die Härtung schneller und vollständiger initiiert und unterstützt wird.

In einer weiteren Ausführungsform des erfindungsgemäßen Verfahrens ist es möglich, dass bei Ausbildung mehrerer Mikrowellen-Sendeantennen diese getrennt voneinander angesteuert werden. Diese getrennte Ansteuerung kann mittels einer einzigen Strahlungsabgabe-Steuereinheit erfolgen. Des Weiteren ist es möglich, dass mehrere Strahlungsabgabe-Steuereinheiten ausgebildet sind, wobei beispielsweise pro Mikrowellen-Sendeantenne eine Strahlungsabgabe-Steuereinheit ausgebildet ist.

Dies ermöglicht zum Beispiel, dass die Mikrowellen-Sendeantennen nicht exakt mittig bzw. zentral in einem Rohr angeordnet sein müssen. Mit Hilfe entsprechender Sensoren und der damit detektierten Werte kann auf die unterschiedlichen Distanzen zwischen einer Mikrowellen-Sendeantenne und dem auszuhärtenden Harz mittels angepasster Abstrahlungsleistung reagiert werden.

Die Frequenz und/oder die Mikrowellenenergie der von der mindestens einen Mikrowellen-Sendeantenne gesendeten Mikrowellen kann in Abhängigkeit der detektierten Umgebungsparameter eingestellt und/oder gesteuert werden.

Bei dem detektierten Umgebungsparameter kann es sich beispielsweise um die Umgebungstemperatur und/oder um vorhandene Seiteneinläufe und/oder um detektierte gute oder schlechte Wärmekopplungen zum Rohr handeln. Des Weiteren kann eine abhängige Steuerung bei einer Detektion von Wasser erfolgen.

Insbesondere wird im Rahmen des erfindungsgemäßen Systems und/oder des erfindungsgemäßen Verfahrens eine Mikrowellenstrahlung im Frequenzbereich von 100 MHz bis 6 GHz angewandt.

Vorzugsweise wird eines der ISM-Bänder bei 434 MHz oder 915 MHz oder 2,45 GHz oder 5,8 GHz angewandt.

In einer besonders bevorzugten Ausführungsform der Erfindung ist es vorgesehen, dass die Frequenz und/oder die Mikrowellenenergie derart eingestellt wird/werden, dass der zu härtende Kunststoff mit einer derartigen Mikrowellenstrahlungsenergie beaufschlagt wird, dass der zu härtende Kunststoff eine Temperatur von 90 °C - 110 °C, insbesondere von 100 °C, erreicht.

Der Vernetzungsgrad des zumindest teilweise gehärteten Kunststoffs kann mittels eines Infrarot-Sensors und der Detektion der Temperaturveränderung des härtenden Kunststoffs erfolgen. Vorzugsweise wird eine Referenzmessung erstellt, so dass die lokalen Temperaturbedingungen gemessen werden, bevor der Aushärtungsvorgang durchgeführt wird. Mit Hilfe des erfindungsgemäßen Verfahrens ist es somit möglich, bereits kurze Zeit nach dem tatsächlichen Aushärtevorgang eine Überprüfung des Vernetzungsgrades des zumindest teilweise gehärteten Kunststoffes durchzuführen. Möglicherweise fehlerhafte Verbindungsstellen und/oder ausgehärtete Stellen können somit schnellstmöglich behoben werden.

Es ist möglich, dass mindestens eine Mikrowellen-Sendeantenne diskret mechanisch oder auf einer Leiterplatte realisiert wird.

In einer Ausführungsform der Erfindung ist es möglich, dass ein zweistufiger, insbesondere ein dreistufiger, Heizprozess durchgeführt wird.

Die Durchführung des zweistufigen, insbesondere des dreistufigen, Heizprozesses erfolgt mittels mindestens einer Mikrowellen-Sendeantenne. Vorzugsweise erfolgt der mehrstufige Heizprozess mittels mehrerer Mikrowellen-Sendeantennen. Der Heizprozess bzw. der mehrstufige Heizprozess kann auch als Härtungsprozess bzw. mehrstufiger Härtungsprozess bezeichnet werden.

Eine erste Stufe des Heizprozesses bewirkt eine Reaktionsauslösung im zu härtenden Kunststoff.

Eine zweite Stufe des Heizprozesses ist eine gesteuerte Energiebeaufschlagung des Kunststoffes.

Eine optional dritte Stufe des Heizprozesses kann eine nochmalige Energiebeaufschlagung eines Abschnittes der Rohrleitungsauskleidung betreffen.

Mit Hilfe einer dritten Stufe des Heizprozesses ist es möglich, beispielsweise nach entsprechender Detektion eines Vernetzungsgrades des zumindest teilweise gehärteten Kunststoffes eine nochmalige Energiebeaufschlagung vorzunehmen, sofern der detektierte Vernetzungsgrad noch nicht ausreichend ist.

Der zweistufige, insbesondere der dreistufige, Heizprozess kann in Abhängigkeit detektierter Umgebungsparameter und/oder in Abhängigkeit detektierter exothermer Energie und/oder in Abhängigkeit eines/des detektierten Vernetzungsgrades des zumindest teilweise gehärteten Kunststoffes gesteuert werden. Insbesondere betrifft die Steuerung die jeweilige Höhe der Energiebeaufschlagung in den einzelnen Stufen des Heizprozesses. Des Weiteren betrifft die Steuerung vorzugsweise die Entscheidung dahingehend, ob eine dritte Stufe eines Heizprozesses durchgeführt wird.

Mit Hilfe des erfindungsgemäßen Verfahrens ist es möglich, die Frequenz und/oder die Mikrowellenenergie und/oder die Dauer der Beaufschlagung einer Rohrleitungsauskleidung mit Mikrowellen abschnittsweise vorzunehmen.

Mit Hilfe des erfindungsgemäßen Verfahrens, insbesondere unter Anwendung des erfindungsgemäßen Systems, ist es erstmals möglich, Informationen über die auszuhärtenden Kunststoffe detailliert im Verfahren zu erfassen und/oder entsprechend umzusetzen. Dabei kann es sich um Parameter wie GlasÜbergangstemperaturen, Variationen der spezifischen Wärme sowie möglicherweise verbleibende exotherme Energien handeln. Diese Parameter korrelieren mit der Aushärtungsentwicklung der Kunststoffe. Bei den Kunststoffen handelt es sich vorzugsweise um Harze, insbesondere um duroplastische Polymere.

Mit Hilfe der Sensor-Einheit ist es möglich, Änderungen der thermischen Eigenschaften des Kunststoffes, insbesondere des Polymers, zu erfassen.

Insbesondere ist es aufgrund des erfindungsgemäßen Verfahrens möglich, in situ, d. h. während des Verfahrens und/oder im Rohr, entsprechende Parameter zu erfassen und das Verfahren anhand der erfassten Parameter entsprechend zu steuern. Dies betrifft insbesondere die Steuerung mindestens einer Mikrowellen-Sendeantenne.

Bei den erfassten Parametern kann es sich beispielsweise auch um die erfassten Zeitpunkte hinsichtlich Gel- oder Glas-Übergängen von ungehärteten oder zumindest teilweise gehärteten Kunststoffen handeln.

Des Weiteren ist es möglich, im erfindungsgemäßen Verfahren eine Datenübertragung, insbesondere eine Fernüberwachung, durchzuführen. Mit Hilfe einer derartigen Datenübertragung kann ein direkter Datenabgleich erfolgen und eine Steuerung, insbesondere eine Steuerung im Sinne einer Fernwartung, erfolgen.

Mit Hilfe des Verfahrens ist es zum einen möglich, schnellere Aushärtungen der Kunststoffe zu erzielen.

Des Weiteren ist es zusätzlich möglich, dass eine exaktere Aushärtung und somit entsprechende Aushärtungsfehler wie Blasenbildung, Verbrennungen des Kunststoffmaterials sowie unzureichende Vernetzungsgrade mit Hilfe des erfindungsgemäßen Verfahrens konkret überwunden bzw. vermieden werden.

Die Erfindung wird im Folgenden anhand eines Ausführungsbeispiels unter Bezugnahme auf die beigefügte schematische Zeichnung näher erläutert.

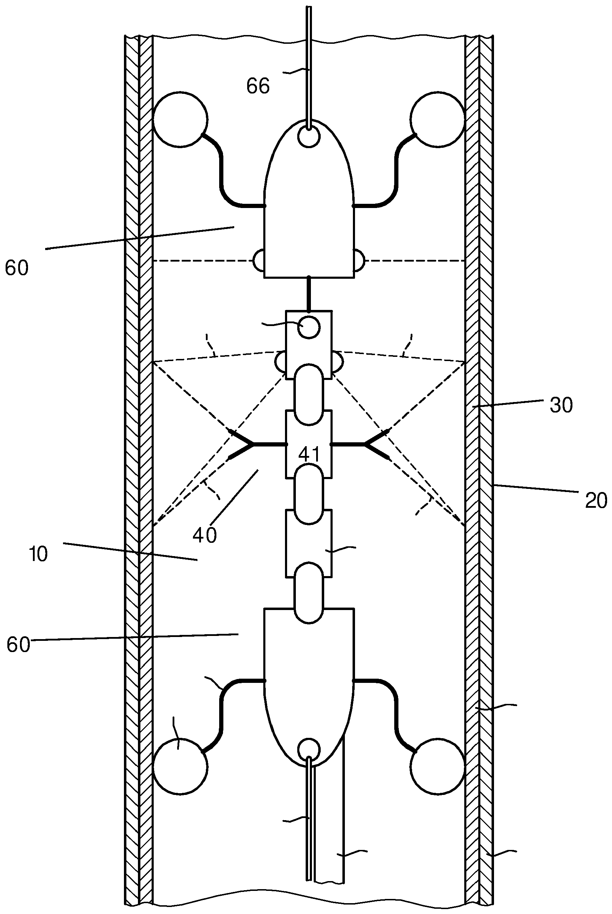

Fig. 1 zeigt eine mögliche Ausführungsform des erfindungsgemäßen Systems 10 zum Aushärten und/oder Überprüfen einer Rohrleitungsauskleidung. Das erfindungsgemäße System 10 befindet sich gemäß der Figur bereits in der Rohrleitung 20. Außerdem befindet sich in der Rohrleitung 20 bereits eine Rohrleitungsauskleidung 30.

Die Rohrleitungsauskleidung 30 liegt an der Innenfläche der Rohrleitung 20 an. Die Rohrleitungsauskleidung 30 besteht wiederum aus einer äußeren Kunststoffschicht und einer inneren Faserverbund-Schicht. Die Faserverbund-Schicht weist einen zu härtenden und/oder zumindest teilweise gehärteten Kunststoff auf.

Im dargestellten Beispiel entspricht eine Rohrleitungs-Baugruppe dem gesamtem System 10.

Das System 10 umfasst mindestens eine Hochfrequenz-Einheit 40, die wiederum mindestens eine Mikrowellen-Generator-Einheit 41 aufweist. Des Weiteren umfasst die Hochfrequenz-Einheit 40 im dargestellten Beispiel zwei Mikrowellen-Sendeantennen. Alternativ ist es möglich, dass die Hochfrequenz-Einheit 40 baulich getrennt ausgebildet ist. Es ist also möglich, dass die Mikrowellen-Generator-Einheit 41 außerhalb der Rohrleitung 20 verbleibt.

Im vorliegenden Ausführungsbeispiel werden die Mikrowellen-Sendeantennen 42 mittels einer Transporteinrichtung 60 transportiert. Die Transporteinrichtung 60 weist einen Front-Abschnitt 61 sowie einen Heck-Abschnitt 62 auf. Als Front-Abschnitt 61 ist der Teil des Systems 10 bzw. der Transporteinrichtung 60 zu verstehen, der in Bewegungsrichtung R des Systems 10 vorne bzw. als erstes angeordnet ist.

Als Heck-Abschnitt 62 ist hingegen der Abschnitt der Transporteinrichtung 60 zu verstehen, der in Bewegungsrichtung R hinten bzw. als letztes angeordnet ist. Die Transporteinrichtung 60 kann weitere Zwischen-Abschnitte aufweisen. Im vorliegenden Fall dienen zum Transport des Systems 10 der Front-Abschnitt 61, der Heck-Abschnitt 62 sowie die Seilzüge 66 und 66'.

Sowohl am Front-Abschnitt 61 als auch am Heck-Abschnitt 62 sind Beinelemente 63 ausgebildet. An den Enden der Beinelemente 63, die in Richtung der Rohrleitung 20 weisen, sind Rollen 64 ausgebildet. Demnach werden eine Bewegung sowie eine Zentrierung des Systems 10 innerhalb der Rohrleitung 20 vorgenommen.

Der vordere Seilzug 66 ist an einer Befestigungsvorrichtung 67 angebracht. Bei der Befestigungsvorrichtung 67 kann es sich um eine Öse handeln. Der hintere Seilzug 66' ist hingegen an der Befestigungsvorrichtung 67' angeordnet. Mittels des vorderen Seilzugs 66 wird das System 10 in die Rohrleitung 20 transportiert. Mit Hilfe des hinteren Seilzugs 66' kann das System 10 aus der Rohrleitung 20 entfernt werden.

Die Beinelemente 63 sind vorzugsweise vorgespannt. Dies kann beispielsweise mit einer (nicht dargestellten) Feder realisiert werden. Mit Hilfe einer Vorspannung der Beinelemente 63 ist es möglich, dass die von den Beinelementen 63 gebildeten Durchmesser an die Durchmesser bzw. Innendurchmesser der Rohrleitung 20 angepasst werden können.

Am Heck-Abschnitt 62 kann außerdem eine Kommunikationsleitung 80 angebracht sein. Diese Kommunikationsleitung 80 dient zur Stromversorgung sowie zum Datenaustausch. Der Datenaustausch ist insbesondere zur Steuerung des Systems 10 während des in der Rohrleitung 20 befindlichen Zustandes notwendig.

In der Figur ist des Weiteren zu erkennen, dass das System 10 eine Strahlungsabgabe-Steuereinheit 45 aufweist. Diese Strahlungsabgabe-Steuereinheit 45 dient zur Regulierung der von den Mikrowellen-Sendeantennen 42 ausgestrahlten Mikrowellen RF.

Das System 10 umfasst des Weiteren eine Sensor-Einheit 50. Dies ist ein Bauteil, das mehrere Sensoren aufweist. Das Bauteil 50 weist zwei Infrarotsensoren 51 auf. Mit Hilfe der ausgestrahlten Infrarotstrahlung IR kann beispielsweise der Vernetzungsgrade des zumindest teilweise gehärteten Kunststoffs detektiert werden. Diese Detektion basiert auf dem Erfassen der Temperaturveränderung des härtenden Kunststoffs.

Außerdem weist die Sensor-Einheit 50 einen Temperatursensor 52 auf, der die Umgebungstemperatur misst.

Am Front-Abschnitt 61 ist des Weiteren eine Durchmesser-Erfassungs-Einheit 65 ausgebildet. Mit Hilfe dieser Durchmesser-Erfassungs-Einheit werden derartige Daten ermittelt und über die Leitung 81 zur Strahlungsabgabe-Steuereinheit 45 gesandt werden.

In Abhängigkeit der ermittelten Durchmesserwerte können die auszustrahlenden Mikrowellen RF angepasst bzw. reguliert werden.

### Bezugszeichenliste

- 10: System
- 20: Rohrleitung
- 30: Rohrleitungsauskleidung
- 40: Hochfrequenz-Einheit
- 41: Mikrowellen-Generator-Einheit
- 42: Mikrowellen-Sendeantenne
- 45: Strahlungsabgabe-Steuereinheit
- 50: Sensor-Einheit
- 51: Infrarot-Sensor
- 52: Temperatursensor
- 60: Transporteinrichtung
- 61: Front-Abschnitt
- 62: Heck-Abschnitt
- 63: Beinelement
- 64: Rolle
- 65: Durchmesser-Erfassungs-Einheit
- 66, 66': Seilzug
- 67, 67': Befestigungsvorrichtung
- 80: Kommunikationsleitung
- 81: Leitung
- R: Bewegungsrichtung
- RF: Mikrowelle
- IR: Infrarotstrahlen

## Patentansprüche

1. System (10) zum Aushärten und/oder Überprüfen einer in einer Rohrleitung (20) positionierten Rohrleitungsauskleidung (30), wobei die Rohrleitungsauskleidung (30) eine äußere Kunststoffschicht und eine innere Faserverbund-Schicht aufweist, wobei die Faserverbund-Schicht einen zu härtenden und/oder zumindest teilweise gehärteten Kunststoff aufweist, wobei das System (10)mindestens eine Hochfrequenz-Einheit (40) umfasst, die mindestens eine Mikrowellen-Generator-Einheit (41) und mindestens eine Mikrowellen-Sendeantenne (42) zum Aushärten eines zu härtenden Kunststoffs aufweist, wobei zumindest die mindestens eine Mikrowellen-Sendeantenne (42) mittels einer Transporteinrichtung (60) in der Rohrleitung (20) bewegbar ist,
**dadurch gekennzeichnet, dass**
die mindestens eine Mikrowellen-Generator-Einheit (41) eine Festkörper-Mikrowellen-Generator-Einheit (41) ist.

2. System (10) nach Anspruch 1,
**dadurch gekennzeichnet, dass**
die Hochfrequenz-Einheit (40) mindestens zwei Mikrowellen-Generator-Einheiten, insbesondere mindestens drei Mikrowellen-Generator-Einheiten, insbesondere mindestens vier Mikrowellen-Generator-Einheiten, umfasst und/oder
die mindestens eine Mikrowellen-Generator-Einheit (41) 100 - 1.000 W Mikrowellenleistung erzeugt,
und/oder
die Hochfrequenz-Einheit (40) mindestens drei Mikrowellen-Sendeantennen (42) aufweist.

3. System (10) nach Anspruch 1 oder 2,
**gekennzeichnet durch**
mindestens einen Infrarot-Sensor (51) und/oder mindestens einen Temperatursensor (52) und/oder mindestens einen Drucksensor und/oder
mindestens einen Feuchtigkeitssensor und/oder mindestens einen Positionssensor und/oder mindestens einen Wegmessungssensor und/oder
mindestens einen Gyrosensor aufweist.

4. System (10) nach einem der Ansprüche 1 bis 3,
**dadurch gekennzeichnet, dass**
die Transporteinrichtung (60) mindestens einen Front-Abschnitt (61) und
einen Heck-Abschnitt (62) umfasst, wobei der Front-Abschnitt (61) und der Heck-Abschnitt (62) voneinander baulich getrennt sein können

5. System (10) nach Anspruch 4,
**dadurch gekennzeichnet, dass**
der Front-Abschnitt (61) und/oder der Heck-Abschnitt (62) mindestens zwei, vorzugsweise mindestens drei, Beinelemente (63) umfasst, die vorzugsweise mittels einer Feder vorgespannt sind.

6. System (10) nach einem der vorangegangenen Ansprüche, insbesondere nach Anspruch 4 oder 5,
**gekennzeichnet durch**
mindestens eine Kamera, vorzugsweise mit Beleuchtungseinheit, die im Bereich des Front-Abschnitts (61) ausgebildet ist und/oder mindestens eine Kamera, vorzugsweise mit Beleuchtungseinheit, die im Bereich des Heck-Abschnitts (62) ausgebildet ist.

7. System (10) nach einem der vorangegangenen Ansprüche,
**dadurch gekennzeichnet, dass**
die Transporteinrichtung (60) mindestens einen Seilzug (66) aufweist,
wobei mindestens eine Befestigungseinrichtung (67) zur Anbringung des Seilzugs (66) ausgebildet ist.

8. System (10) nach einem der vorangegangenen Ansprüche, insbesondere nach Anspruch 7,
**gekennzeichnet durch**
eine Positionsbestimmungs-Einheit, die vorzugweise ein LIDAR-System und/oder ein Ultraschall-System und/oder eine Bilderfassungs-Einheit und/oder ein Encoder auf dem Seilzug (66) der Transportvorrichtung (60) ist,
und/oder
eine Durchmesser-Erfassungs-Einheit (65), insbesondere eine optische Durchmesser-Erfassungseinheit oder eine Ultraschall-Durchmesser-Erfassungseinheit.

9. System (10) nach einem der vorangegangenen Ansprüche,
**dadurch gekennzeichnet, dass**
der zu härtende Kunststoff ein wärmehärtender Kunststoff, insbesondere ein Epoxid-Harz oder ein ungesättigter Polyester-Harz (UP-Harz) oder ein Venylesther (VE) ist und/oder
die Rohrleitungsauskleidung schlauchartig ausgebildet ist und/oder
die Faserverbund-Schicht Glasfasern umfasst.

10. System (10) nach einem der vorangegangenen Ansprüche,
**dadurch gekennzeichnet, dass**
die mindestens Mikrowellen-Sendeantenne (42) eine Schlitzantenne oder eine Monopol-Antenne oder eine Patchantenne oder eine Dipol-Antenne oder ein Hornstrahler ist.

11. System (10) nach einem der vorangegangenen Ansprüche,
**dadurch gekennzeichnet, dass**
die mindestens eine Mikrowellen-Sendeantenne (42) von einer Strahlungsabgabe-Steuereinheit (45) angesteuert oder ansteuerbar ist.

12. System (10) nach einem der vorangegangenen Ansprüche,
**gekennzeichnet durch**
mehrere Mikrowellen-Sendeantennen (42), die von mindestens einer Strahlungsabgabe-Steuereinheit (45) getrennt voneinander angesteuert oder ansteuerbar sind.

13. System (10) nach einem der vorangegangenen Ansprüche,
**gekennzeichnet durch**
eine Aufzeichnungs-Einheit zur Speicherung von Umgebungsparametern und/oder des Energieverbrauchs und/oder von Verfahrensablaufdaten.

14. System (10) nach einem der vorangegangenen Ansprüche,
**gekennzeichnet durch**
mindestens eine Luftkühlungs-Einheit.

15. Verfahren zum Aushärten und/oder Überprüfen einer in einer Rohrleitung (20) positionierten Rohrleitungsauskleidung (30),
wobei die Rohrleitungsauskleidung (30) eine äußere Kunststoffschicht und eine innere Faserverbund-Schicht aufweist, wobei die Faserverbund-Schicht einen zu härtenden und/oder zumindest teilweise gehärteten Kunststoff aufweist,
wobei das Verfahren mit einem System (10) nach einem der Ansprüche 1 bis 14 durchgeführt wird und zumindest Teile des Systems (10) derart in die Rohrleitung (20) eingeführt werden, dass diese Teile des Systems (10) von der Rohrleitungsauskleidung (30), insbesondere beabstandet, umgeben sind, wobei der Kunststoff der Faserverbund-Schicht aufgrund der von der mindestens einen Mikrowellen-Sendeantenne (42) ausgesendeten Mikrowellen gehärtet wird und/oder der zumindest teilweise gehärtete Kunststoff hinsichtlich seines Vernetzungsgrades überprüft wird.

16. Verfahren nach Anspruch 15,
**dadurch gekennzeichnet, dass**
der Härtegrad des zu härtenden Kunststoffs durch Steuerung der mindestens einen Mikrowellen-Sendeantenne (42) mittels einer Strahlungsabgabe-Steuereinheit (45) eingestellt wird.

17. Verfahren nach Anspruch 15 oder 16,
**dadurch gekennzeichnet, dass**
die Frequenz und/oder Mikrowellenenergie der von der mindestens einen Mikrowellen-Sendeantenne (42) gesendeten Mikrowellen in Abhängigkeit der detektierten Umgebungsparameter eingestellt und/oder gesteuert wird.

18. Verfahren nach einem der Ansprüche 15 bis 17,
**dadurch gekennzeichnet, dass**
der Vernetzungsgrad des zumindest teilweise gehärteten Kunststoffs mittels eines Infrarot-Sensors (51) und der Detektion der Temperaturveränderung des härtenden Kunststoffs erfolgt.

19. Verfahren nach einem der Ansprüche 15 bis 18,
**dadurch gekennzeichnet, dass**
mittels einer Durchmesser-Erfassungs-Einheit (65) die Durchmesser-Werte der Rohrleitung (20) und/oder der Rohrleitungsauskleidung (30) ermittelt werden.

20. Verfahren nach einem der Ansprüche 15 bis 19,
**dadurch gekennzeichnet, dass**
ein zweistufiger, insbesondere ein dreistufiger, Heizprozess mittels mindestens einer Mikrowellen-Sendeantenne (42), vorzugsweise mittels mehrerer Mikrowellen-Sendeantenne (42), durchgeführt wird.

21. Verfahren nach Anspruch 20,
**dadurch gekennzeichnet, dass**
der zweistufige, insbesondere der dreistufige, Heizprozess in Abhängigkeit detektierter Umgebungsparameter und/oder in Abhängigkeit detektierter exothermer Energie und/oder in Abhängigkeit eines/des detektierten Vernetzungsgrades des zumindest teilweise gehärteten Kunststoffs gesteuert wird.

22. Verfahren nach einem der Ansprüche 15 bis 21,
**dadurch gekennzeichnet, dass**
mehrere Mikrowellen-Sendeantennen (42) getrennt voneinander angesteuert werden.

## Claims

1. A system (10) for curing and/or inspecting a pipeline lining (30) positioned in a pipeline (20), the pipeline lining (30) comprising an outer plastics material layer and an inner fibre composite layer, the fibre composite layer comprising a plastics material which is to be cured and/or which is at least partially cured,
wherein the system (10) comprises
at least one high-frequency unit (40) which comprises at least one microwave-generator unit (41) and at least one microwave-transmitting antenna (42) for curing a plastics material which is to be cured, at least the at least one microwave-transmitting antenna (42) being movable in the pipeline (20) by means of a transporting device (60),
**characterised in that**
the at least one microwave-generator unit (41) is a solid-state microwave-generator unit (41).

2. The system (10) according to claim 1
**characterised in that**
the high-frequency unit (40) comprises at least two microwave-generator units, especially at least three microwave-generator units, especially at least four microwave-generator units
and/or
the at least one microwave-generator unit (41) generates 100 - 1000 W of microwave power,
and/or
the high-frequency unit (40) comprises at least three microwave-transmitting antennas (42).

3. The system (10) according to claim 1 or 2,
**characterised by**
at least one infrared sensor (51) and/or at least one temperature sensor (52) and/or at least one pressure sensor and/or at least one moisture sensor and/or at least one position sensor and/or at least one travel measurement sensor and/or at least one gyro sensor.

4. The system (10) according to one of claims 1 to 3,
**characterised in that**
the transporting device (60) comprises at least one front portion (61) and
one rear portion (62), the front portion (61) and the rear portion (62) being able to be structurally separate from one another.

5. The system (10) according to claim 4,
**characterised in that**
the front portion (61) and/or the rear portion (62) comprises at least two,
preferably at least three leg elements (63), which are preferably prestressed by means of a spring.

6. The system (10) according to one of the preceding claims, especially according to claim 4 or claim 5,
**characterised by**
at least one camera, preferably with a lighting unit which is formed in the region of the front portion (61), and/or at least one camera, preferably with a lighting unit which is formed in the region of the rear portion (62).

7. The system (10) according to one of the preceding claims,
**characterised in that**
the transporting device (60) has at least one traction wire (66), at least one fastening device (67) being configured for attachment of the traction wire (66).

8. The system (10) according to one of the preceding claims, especially according to claim 7,
**characterised by**
a position-determining unit, which is preferably a LIDAR system and/or an ultrasound system and/or an image acquisition unit and/or an encoder on the traction wire (66) of the transporting device (60),
and/or
a diameter-sensing unit (65), especially an optical diameter-sensing unit or an ultrasound diameter-sensing unit.

9. The system (10) according to one of the preceding claims,
**characterised in that**
the plastics material to be cured is a thermally curing plastics material, especially an epoxy resin or an unsaturated polyester resin (UP resin) or a vinyl ester (VE) and/or
the pipeline lining is hose-like and/or the fibre composite layer comprises glass fibres.

10. The system (10) according to one of the preceding claims,
**characterised in that**
the at least one microwave-transmitting antenna (42) is a slot antenna or a monopole antenna or a patch antenna or a dipole antenna or a horn radiator.

11. The system (10) according to one of the preceding claims,
**characterised in that**
the at least one microwave-transmitting antenna (42) is actuated or actuatable by a radiation-emitting control unit (45).

12. The system (10) according to one of the preceding claims,
**characterised by**
a plurality of microwave-transmitting antennas (42), which are actuated or actuatable separately from one another by at least one radiation-emitting control unit (45).

13. The system (10) according to one of the preceding claims,
**characterised by**
a recording unit for storing ambient parameters and/or the energy consumption and/or process sequence data.

14. The system (10) according to one of the preceding claims,
**characterised by**
at least one air-cooling unit.

15. A method for curing and/or inspecting a pipeline lining (30) positioned in a pipeline (20),
wherein the pipeline lining (30) comprises an outer plastics material layer and an inner fibre composite layer, wherein the fibre composite layer comprises a plastics material which is to be cured and/or which is at least partially cured, wherein the method is performed using a system (10) according to one of claims 1 to 14 and at least parts of the system (10) are introduced into the pipeline (20) in such a way that these parts of the system (10) are surrounded by the pipeline lining (30), especially spaced apart therefrom, wherein the plastics material of the fibre composite layer is cured on account of the microwaves emitted by the at least one microwave-transmitting antenna (42) and/or the at least partially cured plastics material is inspected in respect of its degree of cross-linking.

16. The method according to claim 15,
**characterised in that**
the degree of curing of the plastics material which is to be cured is set by controlling the at least one microwave-transmitting antenna (42) by means of a radiation-emitting control unit (45).

17. The method according to claim 15 or claim 16,
**characterised in that**
the frequency and/or microwave energy of the microwaves emitted by the at least one microwave-transmitting antenna (42) is set and/or controlled depending on the detected ambient parameters.

18. The method according to one of claims 15 to 17,
**characterised in that**
the degree of cross-linking of the at least partially cured plastics material is determined by means of an infrared sensor (51) and the detection of the temperature change of the plastics material being cured.

19. The method according to one of claims 15 to 18,
**characterised in that**
the diameter values of the pipeline (20) and/or of the pipeline lining (30) are determined by means of a diameter-sensing unit (65).

20. The method according to one of claims 15 to 19,
**characterised in that**
a two-stage, especially a three-stage heating process is performed by means of at least one microwave-transmitting antenna (42), preferably by means of a plurality of microwave-transmitting antennas (42).

21. The method according to claim 20,
**characterised in that**
the two-stage especially three-stage heating process is controlled depending on detected ambient parameters and/or depending on detected exothermic energy and/or depending on a/the detected degree of cross-linking of the at least partially cured plastics material.

22. The method according to one of claims 15 to 21,
**characterised in that**
a plurality of microwave-transmitting antennas (42) are actuated separately from one another.

## Revendications

1. Système (10) de durcissement et/ou de vérification d'un revêtement de canalisation (30) positionné dans une canalisation (20), dans lequel le revêtement de canalisation (30) présente une couche externe en matière plastique et une couche interne en composite à base de fibres, dans lequel la couche en composite à base de fibres présente une matière plastique à durcir et/ou une matière plastique durcie au moins en partie, dans lequel le système (10) comprend au moins une unité haute fréquence (40), qui présente au moins une unité génératrice de micro-ondes (41) et au moins une antenne d'émission de micro-ondes (42) destinée à faire durcir une matière plastique à durcir, dans lequel au moins l'au moins une antenne d'émission de micro-ondes (42) peut être déplacée dans la canalisation (20) au moyen d'un dispositif de transport (60),
**caractérisé en ce que**
l'au moins une unité génératrice de micro-ondes (41) est une unité génératrice de micro-ondes à corps solide (41).

2. Système (10) selon la revendication 1,
**caractérisé en ce que**
l'unité haute fréquence (40) comprend au moins deux unités génératrices de micro-ondes, en particulier au moins trois unités génératrices de micro-ondes, en particulier au moins quatre unités génératrices de micro-ondes,
et/ou
l'au moins une unité génératrice de micro-ondes (41) produit 100 - 1000 W de puissance de micro-ondes,
et/ou
l'unité haute fréquence (40) présente au moins trois antennes d'émission de micro-ondes (42).

3. Système (10) selon la revendication 1 ou 2,
**caractérisé par**
au moins un capteur infrarouge (51) et/ou au moins un capteur de température (52) et/ou au moins un capteur de pression et/ou au moins un capteur d'humidité et/ou au moins un capteur de position et/ou au moins un capteur de mesure de déplacement et/ou au moins un capteur gyroscopique.

4. Système (10) selon l'une quelconque des revendications 1 à 3,
**caractérisé en ce que**
le dispositif de transport (60) comprend au moins une section avant (61) et une section arrière (62), dans lequel la section avant (61) et la section arrière (62) peuvent être séparées l'une de l'autre structurellement.

5. Système (10) selon la revendication 4,
**caractérisé en ce que**
la section avant (61) et/ou la section arrière (62) comprennent au moins deux, de préférence au moins trois éléments de pied (63), qui sont de préférence précontraints au moyen d'un ressort.

6. Système (10) selon l'une quelconque des revendications précédentes, en particulier selon la revendication 4 ou 5,
**caractérisé par**
au moins une caméra, de préférence avec une unité d'éclairage, qui est réalisée dans la zone de la section avant (61), et/ou au moins une caméra, de préférence avec une unité d'éclairage, qui est réalisée dans la zone de la section arrière (62).

7. Système (10) selon l'une quelconque des revendications précédentes,
**caractérisé en ce que**
le dispositif de transport (60) présente au moins un tire-câble (66), dans lequel au moins un dispositif de fixation (67) est réalisé pour installer le tire-câble (66).

8. Système (10) selon l'une quelconque des revendications précédentes, en particulier selon la revendication 7,
**caractérisé par**
une unité de définition de position, qui est de préférence un système LIDAR et/ou un système à ultrasons et/ou une unité de détection d'images et/ou un encodeur sur le tire-câble (66) du dispositif de transport (60),
et/ou
une unité de détection de diamètre (65), en particulier une unité de détection de diamètre optique ou une unité de détection de diamètre à ultrasons.

9. Système (10) selon l'une quelconque des revendications précédentes,
**caractérisé en ce que**
la matière plastique à durcir est une matière plastique thermodurcissable, en particulier une résine époxy ou une résine de polyesters insaturés (UP) ou un vinylester (VE), et/ou
le revêtement de canalisation est réalisé à la manière d'un tuyau flexible et/ou la couche composite à base de fibres comprend des fibres de verre.

10. Système (10) selon l'une quelconque des revendications précédentes,
**caractérisé en ce que**
l'au moins une antenne d'émission de micro-ondes (42) est une antenne fendue ou une antenne monopolaire ou une antenne à plaque ou une antenne dipolaire ou un cornet d'émission.

11. Système (10) selon l'une quelconque des revendications précédentes,
**caractérisé en ce que**
l'au moins une antenne d'émission de micro-ondes (42) est pilotée ou peut être pilotée par une unité de commande de distribution de rayonnement (45).

12. Système (10) selon l'une quelconque des revendications précédentes,
**caractérisé par**
plusieurs antennes d'émission de micro-ondes (42), qui sont pilotées ou peuvent être pilotées de manière séparée les unes des autres par au moins une unité de commande de distribution de rayonnement (45).

13. Système (10) selon l'une quelconque des revendications précédentes,
**caractérisé par**
une unité d'enregistrement destinée à stocker des paramètres d'environnement et/ou la consommation d'énergie et/ou des données de déroulement de procédé.

14. Système (10) selon l'une quelconque des revendications précédentes,
**caractérisé par**
au moins une unité de refroidissement d'air.

15. Procédé pour durcir et/ou vérifier un revêtement de canalisation (30) positionné dans une canalisation (20), dans lequel le revêtement de canalisation (30) présente une couche externe en matière plastique et une couche interne en composite à base de fibres, dans lequel la couche en composite à base de fibres présente une matière plastique à durcir et/ou une matière plastique durcie au moins en partie,
dans lequel le procédé est mis en œuvre avec un système (10) selon l'une quelconque des revendications 1 à 14 et au moins des parties du système (10) sont introduites de telle manière dans la canalisation (20) que ces parties du système (10) sont entourées, en particulier à distance, du revêtement de canalisation (30), dans lequel la matière plastique de la couche en composite à base de fibres est durcie en raison des micro-ondes envoyées par l'au moins une antenne d'émission de micro-ondes (42) et/ou la matière plastique durcie au moins en partie est vérifiée quant à son degré de réticulation.

16. Procédé selon la revendication 15,
**caractérisé en ce que**
le degré de dureté de la matière plastique à durcir est réglé en comandant l'au moins une antenne d'émission de micro-ondes (42) au moyen d'une unité de commande de distribution de rayonnement (45).

17. Procédé selon la revendication 15 ou 16,
**caractérisé en ce que**
la fréquence et/ou l'énergie de micro-ondes des micro-ondes envoyées par l'au moins une antenne d'émission de micro-ondes (42) sont réglées et/ou sont commandées en fonction des paramètres d'environnement détectés.

18. Procédé selon l'une quelconque des revendications 15 à 17,
**caractérisé en ce que**
le degré de réticulation de l'au moins une matière plastique durcie au moins en partie est déterminé au moyen d'un capteur infrarouge (51) et de la détection de la modification de température de la matière plastique à durcir.

19. Procédé selon l'une quelconque des revendications 15 à 18,
**caractérisé en ce que**
les valeurs de diamètre de la canalisation (20) et/ou du revêtement de canalisation (30) sont déterminées au moyen d'une unité de détection de diamètre (65).

20. Procédé selon l'une quelconque des revendications 15 à 19,
**caractérisé en ce que**
un processus de chauffage à deux étapes, en particulier à trois étapes, est mis en œuvre au moyen d'au moins une antenne d'émission de micro-ondes (42), de préférence au moyen de plusieurs antennes d'émission de micro-ondes (42).

21. Procédé selon la revendication 20,
**caractérisé en ce que** le processus de chauffage à deux étapes, en particulier à trois étapes est commandé en fonction de paramètres d'environnement détectés et/ou en fonction d'une énergie exothermique détectée et/ou en fonction d'un/du degré de réticulation détecté de la matière plastique durcie au moins en partie.

22. Procédé selon l'une quelconque des revendications 15 à 21,
**caractérisé en ce que**
plusieurs antennes d'émission de micro-ondes (42) sont pilotées de manière séparée les unes des autres.
